# FASCICULE DE BREVET EUROPEEN

(11) **EP 1 884 669 B1**
(45) Date de publication et mention de la délivrance du brevet: **29.12.2010**
(21) Numéro de dépôt: 07290885.8
(22) Date de dépôt: 13.07.2007
(51) Int. Cl.: F16C 23/08, F16C 33/46

(54) **Cage en tôle et roulement sphérique à rouleaux pourvu d'une telle cage**
Blechkäfig und sphärisches Lager mit einem solchen Käfig
Sheet metal cage and spherical bearing with such a cage

(30) Priorité: 31.07.2006 FR 0606998
(43) Date de publication de la demande: 06.02.2008
(73) Titulaire: S.N.R. ROULEMENTS, 74000 Annecy (FR)
(72) Inventeur: Pollier, Vivien, 74940 Annecy Le Vieux (FR)
(74) Mandataire: Broydé, Marc

(56) Documents cités:
- DE-A1- 3 139 841
- US-A1- 4 687 350

## Description

### DOMAINE TECHNIQUE DE L'INVENTION

L'invention a trait à un roulement sphérique à rouleaux pourvu d'une cage en tôle. Dans le cadre de la présente demande, un roulement sphérique désignera un roulement dont la bague extérieure a un chemin de roulement sphérique qui constitue une rotule dans laquelle un sous-ensemble constitué par les rouleaux et la bague intérieure peut osciller. Ce type de roulement est utilisé notamment dans des applications où l'alignement des organes fixés à la bague intérieure et à la bague extérieure est difficile à obtenir.

### ETAT DE LA TECHNIQUE ANTERIEURE

Dans le document DE 31 39 841 est décrit un roulement sphérique à deux rangées de rouleaux, comportant une bague extérieure monobloc sur laquelle est formé un chemin de roulement sphérique, une bague intérieure monobloc à deux chemins de roulement sphériques symétriques et deux rangées de rouleaux en forme de tonneaux, maintenues en position chacune par une cage en tôle comportant deux anneaux d'extrémité reliées par des ponts. La surface radialement extérieure de la cage comporte une partie cylindrique et une partie tronconique. Du fait de l'encombrement radial de la cage, notamment au niveau de la jonction entre la partie cylindrique et la partie tronconique, l'insertion de la cage dans la bague extérieure est difficile.

Dans le document GB 659 692 est décrit par ailleurs un roulement sphérique à rouleaux comportant une bague extérieure monobloc sur laquelle est formé un chemin de roulement sphérique, une bague intérieure monobloc à deux chemins de roulement sphériques symétriques et deux rangées de rouleaux sur les chemins de roulement. Chaque rangée de rouleaux est maintenue en position par une cage en tôle comportant deux anneaux d'extrémité reliées par des ponts. Chaque pont est pourvu, dans sa partie médiane de griffes de maintien faisant saillie latéralement vers chacun des deux rouleaux adjacents. Ces griffes sont destinées à empêcher un échappement des rouleaux. La surface radialement extérieure de la cage est conformée en arc de cercle, et concentrique avec la bague extérieure. Le maintien des rouleaux dans la cage n'est toutefois pas optimal. En effet, les griffes, pour empêcher efficacement l'échappement des rouleaux, doivent nécessairement être disposées radialement à l'extérieur du cône décrit par les axes de rotation des rouleaux lorsque la cage tourne. Or on observe que le cône décrit par les axes de rotation des rouleaux est situé pour une part radialement à l'extérieur de la surface radiale extérieure de la cage, de sorte qu'il y a très peu de latitude pour disposer les griffes de maintien de manière efficace. En l'espèce, chaque rouleau ne se trouve maintenu que par deux griffes, une par pont, ce qui est insuffisant.

### EXPOSE DE L'INVENTION

L'invention vise donc à remédier aux inconvénients de l'état de la technique, de manière à proposer un roulement sphérique à cage de roulement en tôle qui soit facile à monter, et qui ne risque pas de se démonter.

A cet effet, et suivant un premier aspect de l'invention, celle-ci a pour objet une cage en tôle monobloc pour au moins une rangée de rouleaux d'un roulement sphérique, la cage définissant un axe géométrique de révolution et comportant : un anneau axialement extérieur comportant une face transversale d'extrémité ; un anneau axialement intérieur comportant une face transversale d'extrémité ; et des ponts reliant l'anneau extérieur et l'anneau intérieur et définissant avec l'anneau extérieur et l'anneau intérieur des alvéoles de guidage des rouleaux, la cage comportant en outre une face radiale extérieure tournée radialement vers l'extérieur et s'étendant axialement de l'anneau intérieur à l'anneau extérieur, la face radiale extérieure étant enveloppée par une surface de révolution constituée d'une partie intérieure cylindrique s'étendant à partir de l'anneau intérieur vers l'anneau extérieur, d'une partie extérieure tronconique s'étendant à partir de l'anneau extérieur vers l'anneau intérieur et s'évasant vers l'anneau intérieur suivant un premier angle solide et d'une partie intermédiaire tronconique reliant la partie intérieure et la partie extérieure, et s'évasant vers la partie intérieure suivant un deuxième angle solide inférieur au premier angle solide.

En d'autres termes, la face radiale extérieure est tout entière incluse dans une surface de révolution biconique. La partie intermédiaire tronconique permet une insertion plus aisée de la bague intérieure dans la bague extérieure, et contribue à la rigidification de la bague.

Préférentiellement, les ponts comportent des saillies latérales de guidage des rouleaux, deux saillies latérales de chaque pont étant avantageusement situées axialement de part et d'autre de la partie intermédiaire, et dirigée vers une même alvéole.

Ces saillies empêchent l'évasion des rouleaux, d'une part lors du montage et d'autre part lors de l'utilisation du roulement, notamment lorsque la bague intérieure oscille par rapport à la bague extérieure.

Selon un mode de réalisation, l'anneau extérieur comporte une face de guidage cylindrique tournée vers l'intérieur.

Préférentiellement, la partie intermédiaire s'étend axialement de part et d'autre d'un plan transversal médian situé à mi-chemin des faces transversales d'extrémité des anneaux intérieur et extérieur. En d'autres termes, la partie intermédiaire s'étend approximativement de part et d'autre du centre des rouleaux. Cette partie est celle qui se trouve la plus exposée lors de l'insertion de la cage dans la bague extérieure.

Selon un deuxième aspect de l'invention, celle-ci a trait à un roulement sphérique comportant : une bague extérieure monobloc sur laquelle est formé un chemin de roulement sphérique ; une bague intérieure sur laquelle sont formées deux chemins de roulement ; deux cages en tôle telles que décrites précédemment ; et des rouleaux à génératrice en arc de cercle disposés dans les alvéoles de la cage, entre la bague intérieure et la bague extérieure et de manière à former deux rangées de rouleaux roulant sur les chemins de roulement.

Préférentiellement, la partie intermédiaire est située radialement à l'extérieur d'un tronc de cône décrit par les axes de rotation des rouleaux lorsque la bague tourne autour de l'axe de révolution. La surface de révolution est préférentiellement située radialement à l'extérieur d'un tronc de cône décrit par les axes de rotation des rouleaux lorsque la bague tourne autour de l'axe de révolution.

Préférentiellement, le diamètre de la première partie est inférieur au plus petit diamètre (Φₘᵢₙ) de la bague extérieure.

Selon un mode de réalisation, l'anneau extérieur de chaque cage comporte une face cylindrique tournée radialement vers l'intérieur en regard d'une regard d'une surface correspondante dé la bague intérieure tournée radialement vers l'extérieur.

Selon un mode de réalisation particulièrement simple, les deux cages sont identiques. Préférentiellement, la bague intérieure est monobloc.

Les dimensions de la cage, et notamment la dimension de la partie intermédiaire et la dimension axiale de la bague intérieure et des cages, ainsi que le plus petit diamètre extérieur de la bague extérieure sont choisis pour permettre un montage d'un sous-ensemble constitué par la bague intérieure, les cages et une partie des rouleaux dans la bague extérieure sans contact avec la bague extérieure.

### BREVE DESCRIPTION DES FIGURES

D'autres avantages et caractéristiques ressortiront plus clairement de la description qui va suivre d'un mode particulier de réalisation de l'invention, donné à titre d'exemple non limitatif, et représenté aux dessins annexés sur lesquels :
- La figure 1 illustre une coupe axiale d'un roulement selon l'invention ;
- La figure 2 illustre en perspective une phase d'assemblage du roulement de la figure 1.

### DESCRIPTION DETAILLEE D'UN MODE DE REALISATION

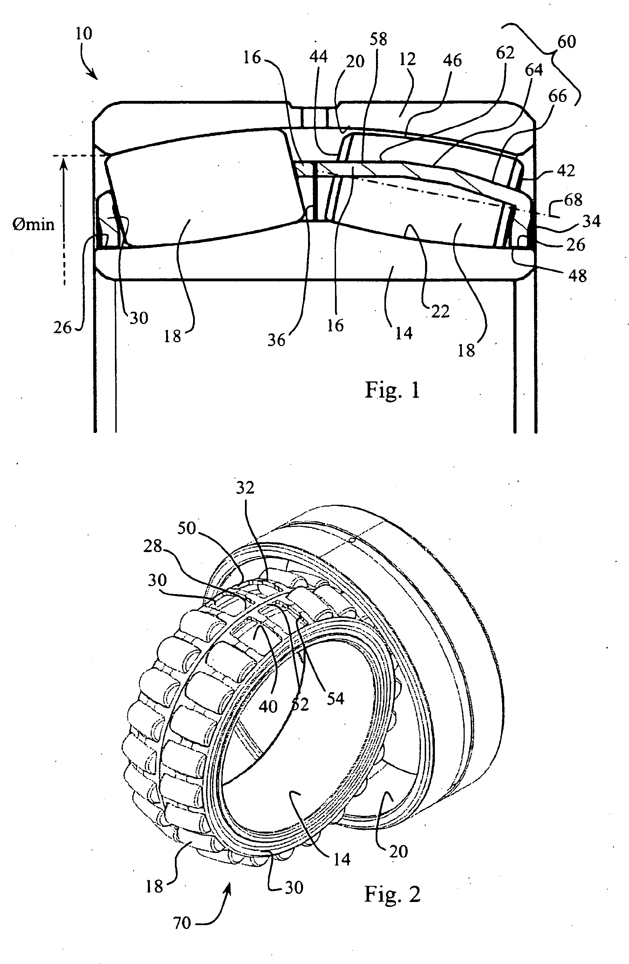

En référence à la figure 1, un roulement sphérique 10 est composé d'une bague extérieure 12, d'une bague intérieure 14 de deux cages 16 et de rouleaux 18.

La bague extérieure 12 est constituée d'une pièce monobloc en acier et comporte un chemin de roulement 20 unique sphérique, c'est-à-dire dont la surface se trouve sur une sphère centrée au centre de symétrie de la bague.

La bague intérieure 14 est également monobloc et comporte deux chemins de roulement 22 faisant face au chemin de roulement 20 de la bague extérieure. Chacun de ces deux chemins de roulement 22 constitue une surface de révolution dont la génératrice dans le plan de la figure 1 est un arc de cercle ayant un rayon égal au rayon de courbure du chemin de roulement 20 de la bague extérieure. La bague intérieure 14 comporte en outre, à chaque extrémité axiale, un rebord 26 tourné radialement vers la bague extérieur et prolongeant le chemin de roulement.

Les deux cages 16, dont certains détails sont visibles sur la figure 2, sont identiques et fabriquées en tôle. Chaque cage définit un axe de révolution confondu avec l'axe de révolution de la bague intérieure, et comporte un anneau axialement intérieur 28, un anneau axialement extérieur 30 et des ponts 32 s'étendant d'un anneau à l'autre. L'anneau extérieur 30 a une face transversale extérieure 34 et l'anneau intérieur une face transversale intérieure 36, les deux faces transversales 34, 36 étant tangentes à deux plans transversaux encadrant la cage. Les ponts 32 sont obtenus par découpe de fenêtres 40 dans la tôle constituant la cage 16, ces fenêtres 40 formant des alvéoles dans lesquelles sont logés les rouleaux 18.

Les rouleaux 18 sont conformés en tonneaux, avec deux faces planes transversales d'extrémité 42, 44 et une surface de roulement convexe 46 engendrée par une génératrice constituée par un arc de cercle de rayon identique au rayon de courbure du chemin de roulement sphérique.

L'anneau extérieur 30 comporte une face cylindrique 48 tournée vers l'intérieur et faisant face au rebord 26 de la bague intérieure, à faible distance de celui-ci, de manière à assurer un guidage de la cage 16 par rapport à la bague intérieure 14.

L'anneau extérieur 30 forme, au niveau des alvéoles, des facettes de contact 50 essentiellement perpendiculaires à l'axe de rotation des rouleaux, assurant un guidage des faces planes transversales d'extrémité 42 des rouleaux. De même, l'anneau intérieur forme au niveau des alvéoles des facettes de contact 52 essentiellement perpendiculaires à l'axe de rotation des rouleaux, assurant un guidage des faces planes transversales d'extrémité 44 des rouleaux. Les ponts 32 comportent en outre des saillies latérales 54 de guidage des rouleaux.

Chaque cage a une face 58 tournée radialement vers l'extérieur, qui s'étend de l'anneau extérieur 30 à l'anneau intérieur 28. Cette face radiale extérieure 58 est contenue dans une enveloppe géométrique 60 constituée par une surface de révolution en trois parties : une première partie intérieure 62 cylindrique s'étendant axialement à partir de l'anneau intérieur 28 vers l'anneau extérieur 30, une deuxième partie intermédiaire tronconique 64 et une troisième partie extérieure 66 également tronconique reliant la deuxième partie 64 à l'anneau extérieur 30. L'angle solide du tronc de cône de la partie extérieure 66 est plus ouvert que l'angle solide du tronc de cône de la partie intermédiaire 64. La partie intermédiaire 64 s'étend axialement de part et d'autre d'un plan situé axialement entre les faces transversales 34, 36 de la cage. La partie intérieure cylindrique 62 a un diamètre inférieur au plus petit diamètre Φₘᵢₙ de la bague extérieure, pour permettre l'insertion de la cage dans la bague extérieure. La face extérieure 58 est située radialement à l'extérieur d'un tronc de cône décrit par les axes de rotation 68 des rouleaux lorsque la bague tourne autour de son axe.

Les anneaux intérieurs 28 des deux cages sont contigus et leurs faces transversales 36 sont quasiment au contact l'une de l'autre.

Pour assembler le roulement, on monte tout d'abord sur la bague intérieure les deux cages 16 munies de leurs rouleaux 18, deux alvéoles par cage restant toutefois vides. Ce sous-ensemble 70 est présenté perpendiculairement à la bague extérieure, comme indiqué sur la figure 2 et inséré dans ce sens dans la bague extérieure 12. Lors de cette insertion, les ponts 32 correspondant aux alvéoles vides sont quasiment au contact de la bague extérieure 12, mais la forme générale de la face radiale extérieure 60 de la cage, et notamment la partie intermédiaire tronconique 64, permettent un passage sans contact. Une fois le sous-ensemble inséré dans la bague extérieure, il est possible de faire pivoter la bague intérieure 14 de manière à présenter vers l'extérieur les alvéoles vides, et à y insérer les rouleaux manquants.

Naturellement, diverses modifications sont possibles. Pour certaines applications, la bague intérieure peut ne pas être symétrique par rapport à son plan médian transversal. De même, la bague extérieure n'a pas nécessairement de plan transversal de symétrie. La bague intérieure n'est pas nécessairement monobloc. Les fenêtres constituant les alvéoles peuvent être obtenues par toute méthode d'usinage appropriée. La tôle constituant les cages peut subir des traitements de surface. La tôle utilisée peut être une tôle d'acier ou une tôle d'aluminium.

## Revendications

1. Cage (16) en tôle monobloc pour au moins une rangée de rouleaux (18) d'un roulement sphérique (10), la cage (16) définissant un axe géométrique de révolution et comportant :
- un anneau axialement extérieur (30) comportant une face transversale d'extrémité (34) ;
- un anneau axialement intérieur (28) comportant une face transversale d'extrémité (36) ;
- des ponts (32) reliant l'anneau extérieur (30) et l'anneau intérieur (28) et définissant avec l'anneau extérieur (30) et l'anneau intérieur (28) des alvéoles (40) de guidage des rouleaux ;
**caractérisée en ce que** la cage comporte une face radiale extérieure (58) tournée radialement vers l'extérieur et s'étendant axialement de l'anneau intérieur (28) à l'anneau extérieur (30), la face radiale extérieure (58) étant enveloppée par une surface de révolution (60) constituée d'une partie intérieure cylindrique (62) s'étendant à partir de l'anneau intérieur vers l'anneau extérieur, d'une partie extérieure tronconique (66) s'étendant à partir de l'anneau extérieur vers l'anneau intérieur et s'évasant vers l'anneau intérieur suivant un premier angle solide et d'une partie intermédiaire tronconique (64) reliant la partie intérieure et la partie extérieure, et s'évasant vers la partie intérieure suivant un deuxième angle solide inférieur au premier angle solide.

2. Cage selon la revendication 1, **caractérisée en outre en ce que** les ponts (32) comportent des saillies latérales (54) de guidage des rouleaux.

3. Cage selon la revendication 2, **caractérisé en outre en ce que** chaque pont comporte au moins deux saillies latérales (54) situées axialement de part et d'autre de la partie intermédiaire, et dirigée vers une même alvéole.

4. Cage selon l'une quelconque des revendications précédentes, **caractérisée en outre en ce que** l'anneau extérieur (30) comporte une face de guidage cylindrique (48) tournée vers l'intérieur.

5. Cage selon l'une quelconque des revendications précédentes, **caractérisée en outre en ce que** la partie intermédiaire (64) s'étend axialement de part et d'autre d'un plan transversal médian situé à mi-chemin des faces transversales d'extrémité des anneaux intérieur et extérieur.

6. Roulement sphérique (10) comportant :
- une bague extérieure monobloc (12) sur laquelle est formé un chemin de roulement sphérique (20) ;
- une bague intérieure (14) sur laquelle sont formées deux chemins de roulement (22) ;
- deux cages en tôle (16) selon l'une quelconque des revendications 1 à 5 ; et .
- des rouleaux (18) à génératrice en arc de cercle disposés dans les alvéoles (40) de la cage, entre la bague intérieure et la bague extérieure et de manière à former deux rangées de rouleaux roulant sur les chemins de roulement.

7. Roulement sphérique selon la revendication 6, **caractérisé en ce que** la partie intermédiaire (64) est située radialement à l'extérieur d'un tronc de cône décrit par les axes de rotation (68) des rouleaux lorsque la bague (16) tourne autour de l'axe de révolution.

8. Roulement sphérique selon la revendication 6, **caractérisé en outre en ce que** la surface de révolution (60) est située radialement à l'extérieur d'un tronc de cône décrit par les axes de rotation (68) des rouleaux lorsque la bague (16) tourne autour de l'axe de révolution.

9. Roulement sphérique selon l'une quelconque des revendications 6 à 8, **caractérisé en ce que** le diamètre de la première partie (62) est inférieur au plus petit diamètre (Φₘᵢₙ) de la bague extérieure.

10. Roulement sphérique selon l'une quelconque des revendications 6 à 9, **caractérisé en outre en ce que** l'anneau extérieur (30) de chaque cage comporte une face cylindrique (48) tournée radialement vers l'intérieur en regard d'une surface correspondante (26) de la bague intérieure tournée radialement vers l'extérieur.

11. Roulement sphérique selon l'une quelconque des revendications 6 à 10, **caractérisé en outre en ce que** les deux cages sont identiques.

12. Roulement sphérique selon l'une quelconque des revendications 6 à 11, **caractérisé en outre en ce que** la bague intérieure est monobloc.

13. Roulement sphérique selon l'une quelconque des revendications 6 à 12, **caractérisé en outre en ce que** la bague intérieure est symétrique par rapport à un plan de symétrie transversal.

## Claims

1. A cage (16) made of one piece in steel sheet for at least one row of rollers (18) of a spherical bearing (10), with the cage (16) defining a geometric axis of revolution and including:
- an axially outer ring (30) including a transversal end face (34);
- an axially inner ring (28) including a transversal end face (36);
- bridges (32) connecting the outer ring (30) and the inner ring (28) and defining cells (40) for guiding the rollers, with the outer ring (30) and the inner ring (28);
**characterized in that** the cage includes a radial outer face (58) radially turned outwards and axially extending from the inner ring (28) to the outer ring (30), with the radial outer face (58) being wrapped by an envelope surface of revolution (60) composed of a cylindrical inner part (62) extending from the inner ring to the outer ring, of a frusto-conical outer part (66) extending from the outer ring to the inner ring and expanding towards the inner ring along a first solid angle and of a frusto-conical intermediate part (64) connecting the inner part and the outer part, and expanding towards the inner part along a second solid angle smaller than the first solid angle.

2. A cage according to claim 1, further **characterized in that** the bridges (32) include side protrusions (54) for guiding the rollers.

3. A cage according to claim 2, further **characterized in that** each bridge includes at least two side protrusions (54) axially located on either side of the intermediate part, and oriented toward the same cell.

4. A cage according to any one of the preceding claims, further **characterized in that** the outer ring (30) includes a cylindrical guiding face (48) turned outwards.

5. A cage according to any one of the preceding claims, **characterized in that** the intermediate part (64) axially extends on either side of a medium transversal plane located mid-way from the transversal end faces of the inner and outer rings.

6. A roller bearing (10) including:
- an outer ring (12) made of one piece whereon a spherical raceway (20) is formed;
- an inner ring (14) whereon two raceways (22) are formed;
- two cages (16) made of sheet metal according to any one of claims 1 to 5; and
- rollers (18) with a semi-circular generatrix, positioned in the cells (40) of the cage, between the inner ring and the outer ring and so as to form two rows of rollers rolling on the raceways.

7. A roller bearing according to claim 6, **characterized in that** the intermediate part (64) is radially located outside of a truncated cone followed by the axes of rotation (68) of the rollers when the ring (16) rotates about the axis of revolution.

8. A roller bearing according to claim 6 further **characterized in that** the surface of revolution (60) is radially located outside of a truncated cone followed by the axes of rotation (68) of the rollers when the ring (16) rotates about the axis of revolution.

9. A roller bearing according to any one of claims 6 to 8, **characterized in that** the diameter of the first part (62) is smaller than the smallest diameter (Φₘᵢₙ) of the outer ring.

10. A roller bearing according to any one of claims 6 to 9, further **characterized in that** the outer ring (30) of each cage includes a cylindrical face (48) radially turned inwards opposite a matching surface (26) of the inner ring radially turned outwards.

11. A roller bearing according to any one of claims 6 to 10, further **characterized in that** both cages are identical.

12. A roller bearing according to any one of claims 6 to 11, further **characterized in that** the inner ring is made of one piece.

13. A roller bearing according to any one of claims 6 to 12, further **characterized in that** the inner ring is symmetrical with respect to a transversal plane of symmetry.

## Patentansprüche

1. Einteiliger Käfig (16) aus Blech für mindestens eine Reihe Rollen (18) eines kugelförmigen Lagers (10), wobei der Käfig (16) eine geometrische Drehachse definiert und folgende Teile umfaßt:
- einen axial außenliegenden Ring (30), der eine transversale Endfläche (34) umfaßt;
- einen axial innen liegenden Ring (28), der eine transversale Endfläche (36) umfaßt;
- Brücken (32), die den außenliegenden Ring (30) und den innen liegenden Ring (28) verbinden und mit dem außenliegenden Ring (30) und dem innen liegenden Ring (28) Waben (40) für die Führung der Rollen definieren,
**dadurch gekennzeichnet, daß** der Käfig eine radiale Außenfläche (58) umfaßt, die radial nach außen gedreht ist und sich axial vom innen liegenden Ring (28) zum außenliegenden Ring (30) erstreckt, wobei die radiale Außenfläche (58) von einer rotationssymmetrische Mantelfläche (60) umgeben ist, die aus einem inneren zylinderförmigen Teil (62) gebildet wird, der sich ab dem inneren Ring zum äußeren Ring erstreckt, einem äußeren kegelstumpfförmigen Teil (66), der sich ab dem äußeren Ring zum inneren Ring erstreckt und sich dabei zum inneren Ring nach einem ersten festen Winkel erweitert, und einem kegelstumpfförmigen Zwischenteil (64), der den inneren Teil und den äußeren Teil verbindet und sich dabei zum inneren Teil nach einem zweiten Festwinkel erweitert, der kleiner als der erste Festwinkel ist.

2. Käfig nach Anspruch 1, ferner **dadurch gekennzeichnet, daß** die Brücken (32) seitliche Vorsprünge (54) für die Führung der Rollen umfassen.

3. Käfig nach Anspruch 2, ferner **dadurch gekennzeichnet, daß** jede Brücke zumindest zwei seitliche Vorsprünge (54) umfaßt, die sich axial zu beiden Seiten des Zwischenteils befinden und zu einer gleichen Wabe gerichtet sind.

4. Käfig nach einem beliebigen der vorstehenden Ansprüche, ferner **dadurch gekennzeichnet, daß** der äußere Ring (30) eine zylinderförmige Führungsfläche (48) umfaßt, die nach innen gedreht ist.

5. Käfig nach einem beliebigen der vorstehenden Ansprüche, ferner **dadurch gekennzeichnet, daß** sich der Zwischenteil (64) axial zu beiden Seiten einer medianen Querebene erstreckt, die sich auf halbem Wege zwischen den transversalen Endflächen des Innenrings und des Außenrings befindet.

6. Kugellager (10) mit folgenden Teilen:
- ein einteiliger Außenring (12), auf dem ein Kugellagerring (20) ausgebildet ist;
- ein Innenring (14), auf dem zwei Laufbahnkreise (22) ausgebildet sind;
- zwei Käfige aus Blech (16) nach einem beliebigen der vorstehenden Ansprüche 1 bis 5;
- Rollen (18) mit kreisbogenförmiger Mantellinie, die in den Waben (40) des Käfigs, und zwar zwischen dem Innenring und dem Außenring und so angeordnet sind, daß zwei Rollenreihen gebildet werden, die auf den Laufbahnkreisen rollen.

7. Kugellager nach Anspruch 6, **dadurch gekennzeichnet, daß** sich der Zwischenteil (64) radial außerhalb eines Kegelstumpfes befindet, der von den Rotationsachsen (68) der Rollen beschrieben wird, wenn der Ring (16) um die Drehachse dreht.

8. Kugellager nach Anspruch 6, ferner **dadurch gekennzeichnet, daß** sich die rotationssymmetrische Mantelfläche (60) radial außerhalb eines Kegelstumpfes befindet, der von den Rotationsachsen (68) der Rollen beschrieben wird, wenn der Ring (16) um die Drehachse dreht.

9. Kugellager nach einem beliebigen der vorstehenden Ansprüche 6 bis 8, **dadurch gekennzeichnet, daß** der Durchmesser des ersten Teils (62) kleiner als der kleinste Durchmesser (Φₘᵢₙ) des Außenrings ist.

10. Kugellager nach einem beliebigen der vorstehenden Ansprüche 6 bis 9, ferner **dadurch gekennzeichnet, daß** der Außenring (30) jedes Käfigs eine zylinderförmige Fläche (48) umfaßt, die radial nach innen gedreht ist, und zwar gegenüber einer entsprechenden Fläche (26) des Innenrings, die radial nach außen gedreht ist.

11. Kugellager nach einem beliebigen der vorstehenden Ansprüche 6 bis 10, ferner **dadurch gekennzeichnet, daß** die beiden Käfige identisch sind.

12. Kugellager nach einem beliebigen der vorstehenden Ansprüche 6 bis 11, ferner **dadurch gekennzeichnet, daß** der Innenring einteilig ist.

13. Kugellager nach einem beliebigen der vorstehenden Ansprüche 6 bis 12, ferner **dadurch gekennzeichnet, daß** der Innenring symmetrisch gegenüber einer transversalen Symmetrieebene ist.
